# EUROPEAN PATENT SPECIFICATION

(11) **EP 3 425 279 B1**
(45) Date of publication and mention of the grant of the patent: **02.09.2020**
(21) Application number: 18181576.2
(22) Date of filing: 04.07.2018
(51) Int. Cl.: F23R 3/10, F23R 3/46, F23D 14/82, F23D 23/00

(54) **GAS TURBINE COMBUSTOR INCLUDING FUEL NOZZLE ASSEMBLY**
GASTURBINENBRENNKAMMER MIT BRENNSTOFFDÜSENANORDNUNG
CHAMBRE DE COMBUSTION DE TURBINE À GAZ COMPRENANT UN ENSEMBLE DE BUSES DE COMBUSTIBLE

(30) Priority: 04.07.2017 KR 20170085079
(43) Date of publication of application: 09.01.2019
(73) Proprietor: Doosan Heavy Industries & Construction Co., Ltd, Changwon-si, Gyeongsangnam-do 51711 (KR)
(72) Inventor: Roh, Ujin, 51515 Gyeongsangnam-do (KR); Uhm, Jongho, 16854 Gyeonggi-do (KR)
(74) Representative: Ter Meer Steinmeister & Partner

(56) References cited:
- EP-A2- 2 520 865
- EP-A2- 2 532 964
- EP-A2- 2 568 221
- EP-A2- 2 657 608
- US-A1- 2012 174 589
- US-B2- 8 371 123

## Description

### BACKGROUND OF THE INVENTION

### Field of the Invention

The present invention relates to a fuel nozzle assembly having a plurality of fuel nozzles, a combustor including the fuel nozzle assembly, and a gas turbine including the combustor, and more particularly to a fuel nozzle assembly in which uniform airflow of compressed air introduced into the fuel nozzle assembly is facilitated by a peripheral rim.

### Description of the Related Art

A gas turbine is a power engine that generates a hot gas through combustion of compressed air and fuel and rotates a turbine with the hot gas. The gas turbine is used for combined-cycle power generation and cogeneration.

The gas turbine is roughly divided into a compressor, a combustor, and a turbine. The compressor sucks in and compresses the outside air and delivers the compressed air to the combustor. The compressed air is in a state of high pressure and high temperature. The combustor mixes the compressed air entered from the compressor with fuel injected through swirl vanes arranged in a fuel nozzle assembly composed of fuel nozzles and burns the mixture to produce a combustion gas. The combustion gas is discharged to the turbine, by which the turbine rotates to generate power.

Specifically, the air compressed by the compressor flows into each combustor of a plurality of combustors, each combustor including a fuel nozzle assembly having a plurality of fuel nozzles. In the combustor, fuel is injected through swirl vanes arranged in each fuel nozzle and is then mixed with the compressed air. The mixture of fuel and air is burned in a combustion chamber located at a downstream of each fuel nozzle assembly, and the combustion gas is discharged through a hot gas path within the turbine.

Meanwhile, it is important to maintain uniform airflow as the compressed air is introduced into the fuel nozzle assembly and as the air is supplied to the fuel nozzles. This uniform flow of air is needed to uniformly mix the air with the fuel. Further, in order to make a stable combustion, it is needed to combust the uniform mixture of the air and fuel. However, when the compressed air is introduced into the fuel nozzle assembly, the directionality of the airflow is inherently changed. A change in airflow direction tends to disrupt or interrupt the uniform flow of air and may create a small region where the airflow is slowed or the pressure is low, i.e., an air pocket. A region where the flow rate of air through a fuel nozzle assembly is low may cause a flame anchoring in the fuel nozzles, thereby damaging fuel nozzle components. In addition, the low flow of air supplied to the fuel nozzle assembly may invite partial changes in the mixture of air and fuel, thus increasing a combustion temperature or creating excessive nitrogen oxides (NOx). EP 2 568 221 A2 discloses a turning guide for combustion fuel nozzle in gas turbine and method to turn fuel flow entering combustion chamber. The combustor in EP 2 568 221 A2 discloses a fuel nozzle assembly including: a cylindrical center body; a cylindrical shroud coaxial with and extending around the center body, and forming a passage between the center body and an inlet to the shroud. The shroud has a rim at the inlet of the shroud.

### SUMMARY OF THE INVENTION

Accordingly, it is an object of the present invention to provide a fuel nozzle assembly capable of a uniform inflow of air to uniformly supply air into respective fuel nozzles of the fuel nozzle assembly.

It is the first object of the present invention to provide a combustor according to claim 1 and a further object of the present invention to provide a gas turbine including the combustor.

The peripheral rim may include a fuel nozzle rim formed to cover at least a portion of the inlet of the shroud of at least one of the plurality of outer fuel nozzles.

One of the plurality of outer fuel nozzles may include a fuel nozzle rim having an angle ranging from 90 degrees to 240 degrees around a center of the one of the outer fuel nozzles.

The peripheral rim may be curved outwardly to have a uniform curvature radius. The peripheral rim may have at least two different curvature radii. At least two of the plurality of outer fuel nozzles may have different inlet radii of a corresponding shroud. The peripheral rim may include a fuel nozzle rim having a curvature radius that depends on the inlet radius. The curvature radius of the fuel nozzle rim formed on the shroud having a small inlet radius may be greater than the curvature radius of the fuel nozzle rim formed on the shroud having a large inlet radius.

The inner fuel nozzle may include a central body for fuel injection; a shroud spaced apart from and surrounding the central body of the inner fuel nozzle; and a fuel nozzle rim formed at an inlet of the shroud of the inner fuel nozzle. The peripheral rim may follow an outwardly extending curve having a first curvature radius, and the fuel nozzle rim formed on the shroud of the inner fuel nozzle may follow an outwardly extending curve having a second curvature radius. The first curvature radius may be at least 1.05 times greater than the second curvature radius.

The plurality of outer fuel nozzles may include a first outer fuel nozzle group having a first inlet radius of the shroud and a second outer fuel nozzle group having a second inlet radius of the shroud, and the first and second outer fuel nozzle groups may respectively include the first and second typed fuel nozzles alternately arranged around the inner fuel nozzle. The first inlet radius may be greater than the second inlet radius.

According to another aspect of the present invention, a combustor may include a combustion chamber; and the above fuel nozzle assembly mounted in the combustion chamber and connected to an end plate . The one end of a corresponding shroud may be disposed at a set distance from the end plate, the set distance depending on at least one of relative positions of the inner fuel nozzle and the plurality of outer fuel nozzles and an inlet radius of the corresponding shroud.

The shroud of the inner fuel nozzle may be located closer to the end plate than the shrouds of the outer fuel nozzles.

The shrouds of at least two outer fuel nozzles may have different inlet radii, wherein the smaller the inlet radius of the shroud, the shorter the distance between the end plate and the shroud.

The outer fuel nozzles may be classified into a first outer fuel nozzle group having a first inlet radius of the shroud and a second outer fuel nozzle group having a second inlet radius of the shroud, the first inlet radius being greater than the second inlet radius. Assuming a distance L1 between the end plate and the inlet of the shroud of the inner fuel nozzle, a distance L2 between the end plate and the inlet of the shroud of the first outer fuel nozzle group, and a distance L3 between the end plate and the inlet of the shroud of the second outer fuel nozzle group, a relation of the distances may be expressed as L1 < L2 < L3. The relation of the distances may also be expressed as L1 ≤ (0.8×L3), or as L2 ≤ (0.9×L3).

According to another aspect of the present invention, a gas turbine may include a compressor for compressing air; a combustor for mixing and burning the compressed air and fuel, the combustor including a combustion chamber and the above fuel nozzle assembly mounted in the combustion chamber, the combustion chamber including a combustion liner, a casing disposed to be spaced apart from the combustion liner and to surround the combustion liner, and an end plate combined with the casing and connected to the fuel nozzle assembly; and a turbine for generating power through rotation by a combustion gas received from the combustor,

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a partially cutaway perspective view of a gas turbine including a combustor according to an embodiment of the present invention;
FIG. 2 (please see comment) is a schematic cross-sectional view of a portion of the combustor shown in FIG. 1;
FIGS. 3A and 3B are perspective views of a fuel nozzle assembly according to embodiments of the present invention, respectively showing alternative formations of a fuel nozzle rim;
FIG. 4 is a schematic top view of a fuel nozzle assembly according to an embodiment of the present invention, conceptually showing an outer periphery of the fuel nozzle assembly;
FIGS. 5A and 5B are partially cutaway side views of a fuel nozzle according to embodiments of the present invention, respectively showing alternative formations of a peripheral rim of the fuel nozzle;
FIG. 6 is a perspective view of a fuel nozzle assembly including an inner fuel nozzle according to an embodiment of the present invention;
FIG. 7 is a schematic cross-sectional view of a portion of the combustor shown in FIG. 1;
FIG. 8 is a perspective view of a combustor according to an embodiment of the present invention, showing alternatively formed shrouds of a fuel nozzle assembly; and
FIG. 9 is a schematic side view of a combustor according to an embodiment of the present invention, showing distances between various shrouds and an end plate of the combustor.

### DETAILED DESCRIPTION OF THE INVENTION

Hereinafter, various embodiments of the present invention will be described in detail with reference to the accompanying drawings. It should be understood that the present invention is not intended to be limited to embodiments disclosed herein and includes various modifications, equivalents, and/or alternatives of the disclosed embodiments.

Terminology used herein is merely for the purpose of describing particular embodiments and is not intended to limit the invention. Singular forms utilizing "a," "an," and "the" are intended to include plural forms unless the context clearly dictates otherwise. In addition, terms such as "comprise," "include," and "have" are intended to specify the presence of stated elements, components, operations, functions, features, steps, or the like, without excluding the presence or possibility of additional other elements, components, operations, functions, features, steps, or the like.

The following description of embodiments may omit descriptions of techniques that are well known in the art or not directly related to the present disclosure. This is to clearly convey the subject matter of the present disclosure by omitting unnecessary explanation. For the same reason, some elements in the drawings may be exaggerated, omitted, or schematically illustrated. Also, the size of each element does not entirely reflect the actual size. In the drawings, the same or corresponding elements are denoted by the same reference numerals.

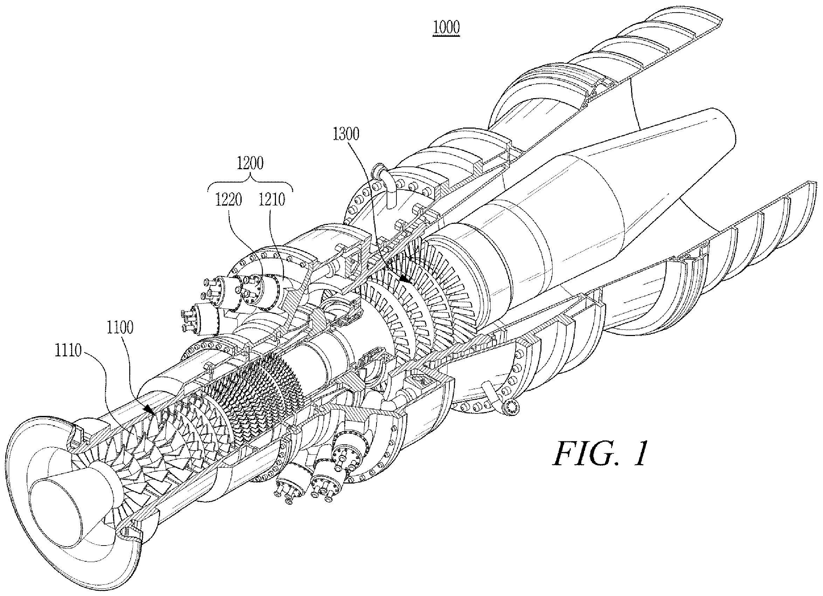

Referring to FIG. 1, a gas turbine 1000 according to an embodiment of the present invention includes a compressor 1100, a combustor 1200, and a turbine 1300. In an embodiment, the compressor 1100 may be directly or indirectly connected to the turbine 1300, receive part of the power generated by the turbine 1300, and utilize the received power for rotation of the blades 1110. The compressor 1100 rotates a plurality of radially installed blades 1110, each blade 1110 having a size and installation angle that may vary depending on its installation position, while sucked-in air is compressed by the rotation of the blades 1110 and moves toward the combustor 1200. Thus, the air compressed in the compressor 1100 moves to the combustor 1200, which includes a fuel nozzle assembly 1220 and a combustion chamber 1210.

The combustor 1200 of the present invention is one of a plurality of such combustors arranged around the gas turbine 1000 as part of its combustor section, which is situated, in general, between the compressor 1100 and the turbine 1300.

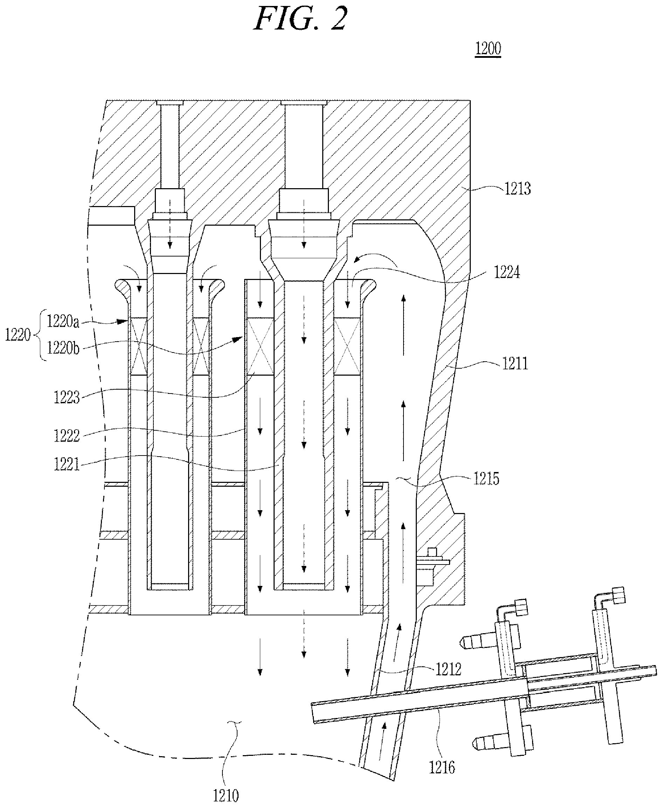

Referring to FIG. 2, the combustion chamber 1210 of the combustor 1200 includes a combustion liner 1212, a casing 1211, and an end plate 1213. The combustion chamber 1210 is a space surrounded by the combustion liner 1212 and a transition piece (not shown). The casing 1211 surrounds the combustion liner 1212 and extends in one direction. Thus, the combustion liner 1212 is disposed inside the casing 1211 and extends in the longitudinal direction of the casing 1211 while being spaced apart from the casing 1211 to form an annular flow space 1215 between the casing 1211 and the combustion liner 1212. The end plate 1213 is joined with the casing 1211 at the end of the casing 1211 and seals the casing 1211. The end plate 1213 may be joined with a manifold (not shown) for supplying fuel to the fuel nozzle assembly 1220, associated valves, and the like.

The fuel nozzle assembly 1220 of the combustor 1200 is connected to one end of the combustion liner 1212 and is thus mounted essentially inside the combustion chamber 1210. That is, one fuel nozzle assembly 1220 is provided for one combustion chamber 1210. The fuel nozzle assembly 1220 includes a plurality of fuel nozzles 1220a and 1220b, the number of which may vary depending on the capacity of the gas turbine 1000. One end of each fuel nozzle 1220a and 1220b is supported by the end plate 1213.

Compressed air and fuel are mixed in each fuel nozzle 1220a and 1220b. Each fuel nozzle 1220a and 1220b includes a central body 1221, a shroud 1222, and a swirl vane 1223. Fuel for combustion is injected through the central body 1221. One end of the central body 1221 is supported by the end plate 1213. The shroud 1222 is spaced apart from the central body 1221 and surrounds the central body 1221. The shroud 1222 may have a pipe-like shape, e.g., a cylindrical shape. The swirl vane 1223 may be installed in and around the central body 1221 at a position spaced apart from an inlet 1224 of the shroud 1222.

The air compressed in the compressor 1100 flows into the flow space 1215 between the casing 1211 and the combustion liner 1212. The compressed air flowing along the flow space 1215 reaches the end plate 1213 located at the end of the casing 1211. The compressed air is diverted at the end plate 1213, that is, its airflow directionality is changed, and the air then flows into the inlet 1224 of the shroud 1222 of the fuel nozzle assembly 1220. The compressed air flowing into the shroud 1222 moves to the combustion chamber 1210 while being mixed with the fuel injected through the central body 1221. In the combustion chamber 1210, ignition is performed by a spark plug 1216, and combustion occurs. A combustion gas is then discharged to the turbine 1300 to rotate the turbine 1300.

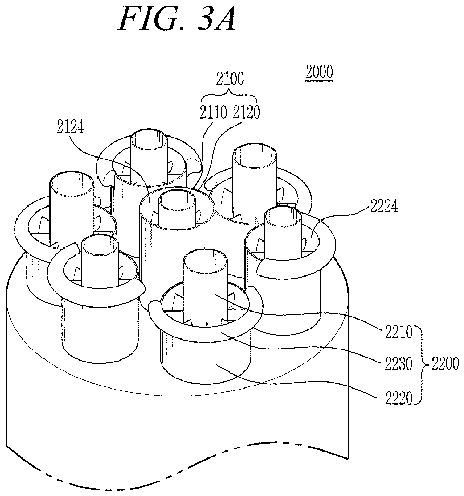

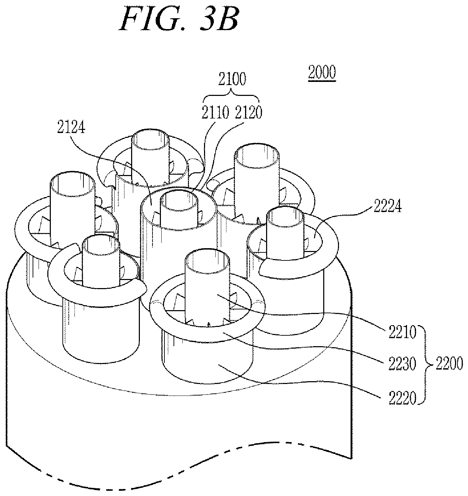

Referring to FIGS. 3A and 3B, a fuel nozzle assembly 2000 according to an embodiment of the present invention includes an inner fuel nozzle 2100 and at least one outer fuel nozzle 2200. Provided in this embodiment are a plurality of outer fuel nozzles 2200.

The inner fuel nozzle 2100 has a central body 2110, a shroud 2120 that surrounds and is spaced apart from the central body 2110, and an inlet 2124 formed at one end of the shroud 2120. Similarly, the outer fuel nozzle 2200 has a central body 2210, a shroud 2220 that surrounds and is spaced apart from the central body 2210, and an inlet 2224 formed at one end of the shroud 2220. The outer fuel nozzles 2200 are disposed radially about the inner fuel nozzle 2100. The same parts of the inner or outer fuel nozzle 2100 or 2200 as those of the fuel nozzle described above with reference to FIG. 2 will be not described hereinafter.

The shroud 2220 of the outer fuel nozzle 2200 may have a fuel nozzle rim 2230 formed at the inlet 2224. The fuel nozzle rim 2230 improves the uniformity of airflow into the outer fuel nozzle 2200.

In this embodiment, the fuel nozzle rim 2230 may be formed over at least a portion of the inlet 2224 of the shroud 2220 of at least one outer fuel nozzle 2200. For example, as shown in FIG. 3A, the fuel nozzle rim 2230 may be formed over a portion of the inlet of the shroud 2220 of the outer fuel nozzle 2200. As shown in FIG. 3B, the fuel nozzle rim 2230 may be formed over the entirety of the inlet 2224 of the shroud 2220 of the outer fuel nozzle 2200.

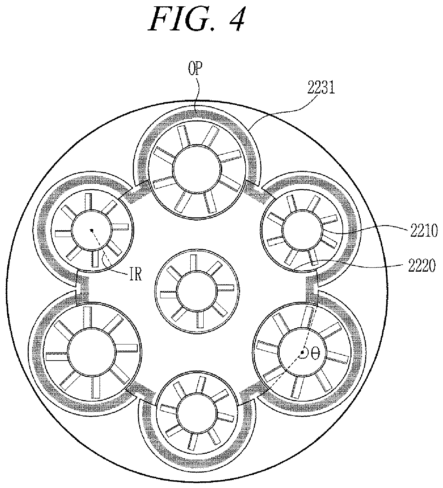

In this manner, with reference to FIG. 4, collectively, the fuel nozzle rims 2230 of the fuel nozzle assembly 2000 may be disposed to cover at least a portion of an outer periphery OP formed by a series of outwardly facing edges of the shrouds 2220 of the outer fuel nozzles 2200. Collectively, the fuel nozzle rims 2230 make up a peripheral rim 2231. In an embodiment, the peripheral rim 2231 of the fuel nozzle assembly 2000 may be disposed to cover the entirety of the outer periphery OP, as shown in FIG. 4.

Referring to FIG. 4, when the peripheral rim 2231 is formed to cover at least a portion of the outer periphery OP, an angle θ of the fuel nozzle rim 2230 may be referenced with respect to the center of any one outer fuel nozzle 2200, to represent the degree of formation of the fuel nozzle rim 2230 over a portion of the inlet 2224 of the shroud 2220. The angle θ may range from 90 degrees to 240 degrees and varies depending on the number of outer fuel nozzles 2200. Meanwhile, the shroud 2220 of one or more of the plurality of outer fuel nozzles 2200 may have an inlet radius IR that differs from that of other outer fuel nozzles 2200. On the other hand, the inlet radii of the shrouds 2220 may be equal to each other.

According to the present invention, the peripheral rim 2231 may be formed to cover some portion, or all, of the outwardly facing edges of the shrouds 2220 making up the outer periphery OP. That is, the peripheral rim 2231 may cover only outwardly facing edges of the shrouds 2220. Meanwhile, the fuel nozzle rim 2230 may be formed to cover some portion, or all, of the edges of the shroud 2220 of one or more of the plurality of outer fuel nozzles 2200. Therefore, alternatively, rather than the peripheral rim 2231 covering only outwardly facing edges of the shrouds 2220, a fuel nozzle rim 2230 may, as shown in FIG. 3B, completely cover the edges of the shroud 2220 of an outer fuel nozzle 2200. However, airflow uniformity is improved when the peripheral rim 2231 covers only outwardly facing edges of the shrouds 2220 and suffers when the fuel nozzle rim 2231 completely covers the edges of one or more shrouds 2220 of the outer fuel nozzles 2200. In addition, employing the peripheral rim 2231 to cover only outwardly facing edges of the shrouds 2220 provides greater spatial access during assembly and disassembly of the fuel nozzle assembly 2000 and thus facilitates the repair of the fuel nozzle assembly 2000 and the replacement of its components.

In other words, the peripheral rim 2231 includes a fuel nozzle rim 2230 formed at the inlet of the shroud 2220 of at least one of the plurality of outer fuel nozzles 2200 and may, as shown in FIG. 4, include the fuel nozzle rims 2230 formed at the shroud inlets of every outer fuel nozzle 2200. One or more of the fuel nozzle rims 2230 making up the peripheral rim 2231 may be formed to cover the corresponding inlet entirely (FIG. 3B), but the fuel nozzle rims 2230 are preferably formed with an angle ranging from 90 degrees to 240 degrees of the outer fuel nozzle 2200 (FIG. 3A).

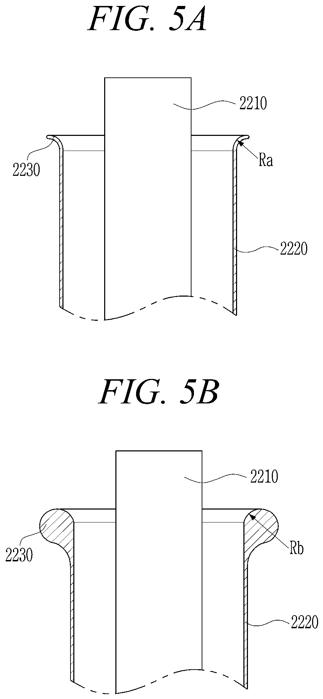

In the embodiment of FIG. 5A, the fuel nozzle rim 2230 may be extended from the shroud 2220 with the same thickness as that of the shroud 2220 and may follow an outwardly extending curve having a uniform curvature radius Ra. In the embodiment of FIG. 5B, the fuel nozzle rim 2230 may be extended from the shroud 2220 with an increased thickness (i.e., a blunt shape) in comparison to that of the shroud 2220 and may follow an outwardly extending curve having a uniform curvature radius Rb. These shapes of the fuel nozzle rim 2230 are exemplary only and not to be construed as a limitation. Meanwhile, the fuel nozzle rim 2230 of one or more of the plurality of outer fuel nozzles 2200 may have a curvature radius that differs from that of other outer fuel nozzles 2200.

Referring again to FIG. 4, the inlet radius IR of the shroud 2220 of an outer fuel nozzle 2200 may differ from that of another, because the size of the central body 2210 or the amount of air to be controlled by each outer fuel nozzle 2200 may vary. Therefore, in each outer fuel nozzle 2200, the curvature radius (e.g., Ra or Rb) of the fuel nozzle rim 2230 may vary depending on the inlet radius IR of the shroud 2220. This is because the curvature radius of the fuel nozzle rim 2230 needs to be changed in order to improve the uniformity of the airflow since the amount of inflow air varies according to the inlet radius IR of the shroud 2220. Preferably, the curvature radius of the fuel nozzle rim 2230 formed on a shroud 2220 having a smaller inlet radius IR is greater than the curvature radius of the fuel nozzle rim 2230 formed on a shroud 2220 having a larger inlet radius IR.

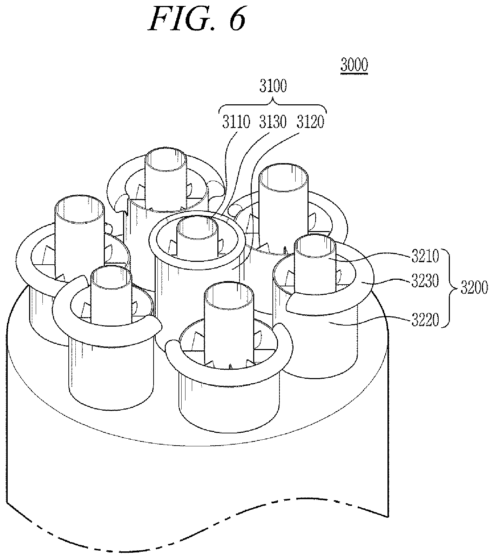

Referring to FIG. 6, a fuel nozzle assembly 3000 according to an embodiment of the present invention may include an inner fuel nozzle 3100 and an outer fuel nozzle 3200. The same parts of the inner or outer fuel nozzle 3100 or 3200 as those described above with reference to FIGS. 3 to 5 will be not described hereinafter.

As shown in FIG. 6, a shroud 3120 of the inner fuel nozzle 3100 may have a fuel nozzle rim 3130 formed at the shroud's inlet. Since the inner fuel nozzle 3100 is centrally situated, to be surrounded by the plurality of outer fuel nozzles 3200, the flow of air into the inner fuel nozzle 3100 is relatively uniform as compared with the outer fuel nozzle 3200. Thus, there is less need to form the fuel nozzle rim 3130 at the inlet of the shroud 3120 in the inner fuel nozzle 3100 than in the case of the outer fuel nozzles 2200. Nevertheless, the fuel nozzle rim 3130 may be formed on the shroud 3120 of the inner fuel nozzle 3100 to improve airflow uniformity.

Similar to the outer fuel nozzle rims shown in FIG. 5, the fuel nozzle rim 3130 formed on the shroud 3120 of the inner fuel nozzle 3100 may also be curved outwardly to have a uniform curvature radius and to have the same thickness as or a greater thickness than that of the shroud 3120. These shapes of the fuel nozzle rim 3130 are exemplary only and not to be construed as a limitation.

In the embodiment of FIG. 6, the curvature radius of the fuel nozzle rim 3130 formed in the inner fuel nozzle 3100 is smaller than the curvature radius of the fuel nozzle rim 3230 formed in the outer fuel nozzle 3200. Since the airflow is typically more uniform in the inner fuel nozzle 3100 than in the outer fuel nozzle 3200, airflow uniformity can be achieved even with relatively small curvature radii. Preferably, the curvature radius of the fuel nozzle rim 3230 of an outer fuel nozzle 3200 is at least 1.05 times greater than that of the fuel nozzle rim 3130 of the inner fuel nozzle 3100. Reducing the radius of the fuel nozzle rim 2130 of the inner fuel nozzle 3100 improves space efficiency and facilitates assembly and disassembly of the fuel nozzle assembly 3000.

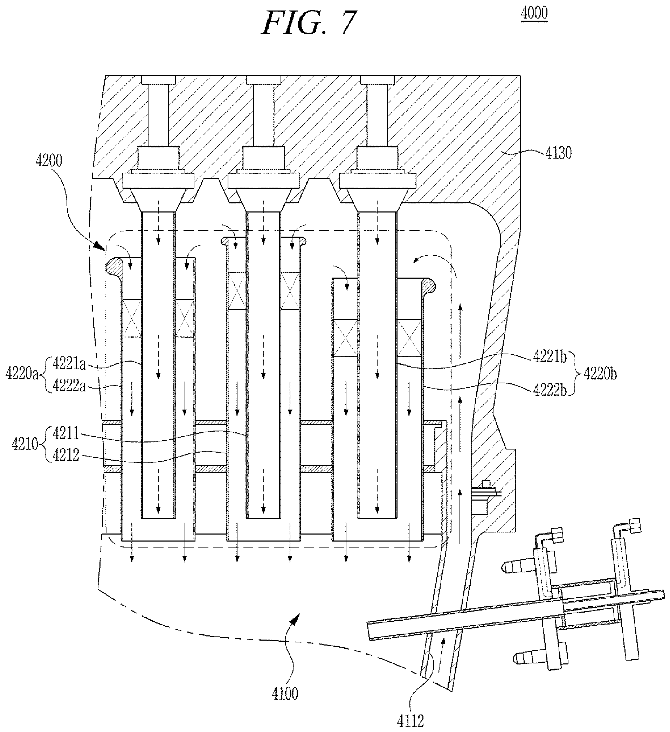

Referring to FIG. 7, a combustor 4000 according to an embodiment of the present invention may include a fuel nozzle assembly 4200, a combustion liner 4112, and a combustion chamber 4100 surrounded by both the fuel nozzle assembly 4200 and the combustion liner 4112. The same parts of the combustor 4000 as those described above with reference to FIG. 2 will be not described hereinafter.

As shown in FIG. 7, the fuel nozzle assembly 4200 includes an inner fuel nozzle 4210 and a plurality of outer fuel nozzles 4220a and 4220b. An end plate 4130 supports a central body 4211 of the inner fuel nozzle 4210 and center bodies 4221a and 4221b of the outer fuel nozzles 4220a and 4220b.

In this embodiment, depending on positions of the inner fuel nozzle 4210 and the plurality of outer fuel nozzles 4220a and 4220b, distances between the end plate 4130 and the respective shrouds 4212, 4222a, and 4222b may be set differently. In one embodiment, the shroud 4212 of the inner fuel nozzle 4210 is located closer to the end plate 4130 than the shrouds 4222a and 4222b of the outer fuel nozzles 4220a and 4220b. When the inner fuel nozzle 4210 and the plurality of outer fuel nozzles 4220a and 4220b are differently spaced apart from the end plates 4130 depending on their positions, it is possible to improve the uniformity of the airflow and to prevent air pockets from being generated inside the fuel nozzles 4210, 4220a, and 4220b.

In another embodiment, the shrouds 4222a and 4222b of the outer fuel nozzles 4220a and 4220b may have different inlet radii. In this case, the smaller the inlet radius of the shrouds 4222a and 4222b, the shorter the distance between the end plate 4130 and the inlet of the shrouds 4222a and 4222b.

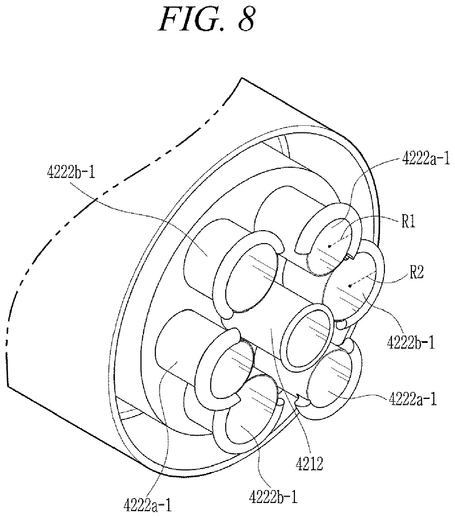

In still another embodiment, as shown in FIG. 8, the outer fuel nozzles may be classified into a first outer fuel nozzle group 4222a-1 having a first inlet radius R1 of the shroud and a second outer fuel nozzle group 4222b-1 having a second inlet radius R2 of the shroud. Here, the first and second outer fuel nozzle groups 4222a-1 4222b-1 respectively include the fuel nozzles 4220a and 4220b alternately arranged around the inner fuel nozzle 4210. In this case, the first inlet radius R2 is greater than the second inlet radius R1. Further, the second outer fuel nozzle group 4222a-1 is closer to the end plate 4130 than the first outer fuel nozzle group 4222b-1. Although two types of inlet radii (R1 and R2) are used in this embodiment, three or more inlet radii may be used.

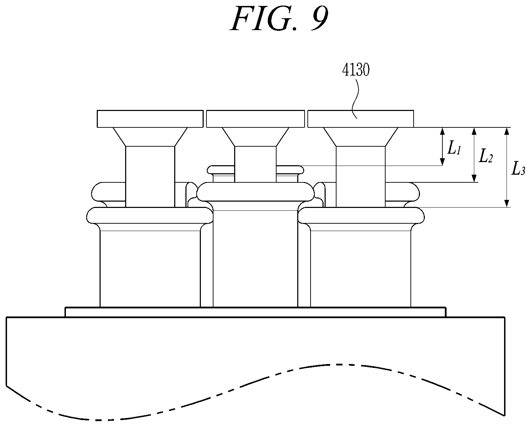

Referring to FIG. 9, there may be three specific distances between the end plate 4130 and the fuel nozzles 4210, 4220a, and 4220b. Assuming a distance L1 between the end plate 4130 and the inlet of the shroud 4212 of the inner fuel nozzle 4210, a distance L2 between the end plate 4130 and the inlet of the shroud 4222a of the first outer fuel nozzle group 4220a, and a distance L3 between the end plate 4130 and the inlet of the shroud 4222b of the second outer fuel nozzle group 4220b, the relation of the distances may be L1 < L2 < L3. In another embodiment, the relation of distances may be expressed as L1 ≤ (0.8×L3). In yet another embodiment, the relation of the distances may be expressed as L2 ≤ (0.9×L3) .

As described hereinbefore in various embodiments, by adjusting the position and/or the curvature radius of the rim formed at the inlet of the shroud, and/or by differently setting the distance between the shroud and the end plate depending on the positions of the inner fuel nozzle and the outer fuel nozzles and/or the inlet radii of the shrouds, it is possible to realize a uniform airflow into the fuel nozzle assembly, including a uniform supply of air into respective fuel nozzles, and to facilitate assembly and disassembly of the fuel nozzle assembly. With the elimination of air pocket formation that comes with uniform airflow, it is further possible to prevent a locally high combustion temperature in the combustion chamber, reduce the creation of nitrogen oxides, prevent the occurrence of flame holding or anchoring in the fuel nozzle, and prevent damage of components of the combustor.

Although the above-described embodiments are regarding the gas turbine, the same may be also applied to other apparatuses for combusting fuel.

While the present disclosure has been particularly shown and described with reference to exemplary embodiments thereof, it is clearly understood that the same is by way of illustration and example only and is not to be taken in conjunction with the present disclosure. It will be understood by those skilled in the art that various changes in form and details may be made therein without departing from the subject matter and scope of the present disclosure.

## Claims

1. A combustor (1200, 4000) for a gas turbine comprising:
a combustion chamber (1210, 4100); and
a fuel nozzle assembly (1220, 2000, 3000, 4200) mounted in the combustion chamber (1210, 4100) and connected to an end plate (1213, 4130) of the combustion chamber (1210, 4100), the fuel nozzle assembly (1220, 2000, 3000, 4200) including:
an inner fuel nozzle (2100, 3100, 4210);
a plurality of outer fuel nozzles (2200, 3200, 4220a, 4220b) disposed radially around the inner fuel nozzle (2100, 3100, 4210), each outer fuel nozzle (2200, 3200, 4220a, 4220b) including a central body (2210, 3210, 4221a, 4221b) for fuel injection and a shroud (2220, 3220, 4222a, 4222b) spaced apart from and surrounding the central body (2210, 3210, 4221a, 4221b), the shrouds (2220, 3220, 4222a, 4222b) of the outer fuel nozzles (2200, 3200, 4220a, 4220b) forming an outer periphery (OP) of the fuel nozzle assembly (1220, 2000, 3000, 4200) by a series of outwardly facing edges of the shrouds (2220, 3220, 4222a, 4222b), and
wherein each of the outer fuel nozzles (2200, 3200, 4220a, 4220b) comprises an inlet (2224) for air formed at one end of the shroud (2220, 3220, 4222a, 4222b) and a fuel nozzle rim (2230) formed at the inlet (2224) of the shroud (2220, 3220, 4222a, 4222b), wherein the fuel nozzle rim (2230) extends from the shroud (2220, 3220, 4222a, 4222b) with the same or increased thickness as that of the shroud (2220, 3220, 4222a, 4222b) and follows an outwardly extending curve having a uniform curvature radius (Ra, Rb); and
wherein the fuel nozzle rims (2230) collectively define a peripheral rim (2231) formed and disposed at the outer periphery (OP) of the fuel nozzle assembly (1220, 2000, 3000, 4200); **characterized in that** the fuel nozzle rim (2230, 3230) of at least one of the plurality of outer fuel nozzles (2200, 3200, 4220a, 4220b) is formed at a portion of the inlet (2224) of the shroud (2220, 3220, 4222a, 4222b) and forms an angle (θ) ranging from 90 degrees to 240 degrees around a center of the outer fuel nozzle (2200, 3200, 4220a, 4220b) and is included in the peripheral rim (2231).

2. The combustor (1200, 4000) according to claim 1, wherein every fuel nozzle rim (2230, 3230) of the outer fuel nozzles (2200, 3200, 4220a, 4220b) is formed at a portion of the inlet (2224) of the shroud (2220, 3220, 4222a, 4222b) and forms an angle (θ) ranging from 90 degrees to 240 degrees around a center of the outer fuel nozzle (2200, 3200, 4220a, 4220b) and is included in the peripheral rim (2231).

3. The combustor (1200, 4000) of any one of preceding claims, wherein the peripheral rim (2231) is curved outwardly to have a uniform curvature radius (Ra, Rb).

4. The combustor (1200, 4000) according to any one of the preceding claims, wherein the peripheral rim (2231) has at least two fuel nozzle rims (2230, 3230) having different curvature radii.

5. The combustor (1200, 4000) according to any one of the preceding claims, wherein at least two of the plurality of outer fuel nozzles (2200, 3200, 4220a, 4220b) have different inlet radii of a corresponding shroud.

6. The combustor (1200, 4000) of claim 5, wherein the peripheral rim (2231) includes a fuel nozzle rim (2230, 3230) having a curvature radius that depends on the inlet radius.

7. The combustor (1200, 4000) of claim 5 or 6, wherein the curvature radius of the fuel nozzle rim (2230, 3230) formed on the shroud having a small inlet radius is greater than the curvature radius of the fuel nozzle rim (2230, 3230) formed on the shroud having a large inlet radius.

8. The combustor (1200, 4000) according to any one of the preceding claims, wherein the inner fuel nozzle (2100, 3100, 4210) includes:
a central body (2110, 4211) for fuel injection;
a shroud (3120, 4212) spaced apart from and surrounding the central body (2110, 4211) of the inner fuel nozzle (2100, 3100, 4210); and
a fuel nozzle rim (3130) formed at an inlet (2124) of the shroud (3120, 4212) of the inner fuel nozzle (2100, 3100, 4210).

9. The combustor (1200, 4000) of claim 8, wherein the fuel nozzle rims (3230) of the shrouds (2220, 3220, 4222a, 4222b) of the outer fuel nozzles (2200, 3200, 4220a, 4220b) have a first curvature radius, and the fuel nozzle rim (3130) formed on the shroud (3120, 4212) of the inner fuel nozzle (2100, 3100, 4210) follows an outwardly extending curve having a second curvature radius, and wherein the second curvature radius is smaller than the first curvature radius.

10. The combustor (1200, 4000) of claim 9, wherein the first curvature radius is at least 1.05 times greater than the second curvature radius.

11. The combustor (1200, 4000) according to any one of the preceding claims, wherein the plurality of outer fuel nozzles (2200, 3200, 4220a, 4220b) include a first outer fuel nozzle group (4222a-1) having a first inlet radius of the shroud (4222a) and a second outer fuel nozzle group (4222b-1) having a second inlet radius of the shroud (4222b), and wherein the shrouds of the first and second outer fuel nozzle groups (4222a-1, 4222b-1) are alternately arranged around the inner fuel nozzle (4210).

12. The combustor (1200, 4000) of claim 11, wherein the first inlet radius is greater than the second inlet radius.

13. The combustor (1200, 4000) according to any one of the preceding claims, wherein the one end of a corresponding shroud is disposed at a set distance from the end plate (1213, 4130), the set distance depending on at least one of
relative positions of the inner fuel nozzle (2100, 3100, 4210) and the outer fuel nozzles (2200, 3200, 4220a, 4220b) and
an inlet radius of the corresponding shroud.

14. The combustor (1200, 4000) of claim 13, wherein the shrouds of at least two outer fuel nozzles (2200, 3200, 4220a, 4220b) have different inlet radii, and
wherein the smaller the inlet radius of the shroud, the shorter the distance between the end plate (1213, 4130) and the shroud.

15. A gas turbine (1000) comprising: a compressor (1100) for compressing air, a combustor (1200, 4000) for mixing and burning the compressed air and fuel and a turbine (1300) for generating power through rotation by a combustion gas received from the combustor (1200, 4000),
**characterized in that** the combustor (1200, 4000) is according to any one of the preceding claims.

## Patentansprüche

1. Verbrennungsvorrichtung (1200, 4000) für eine Gasturbine, die Folgendes umfasst:
eine Brennkammer (1210, 4100) und
eine Brennstoffdüsenanordnung (1220, 2000, 3000, 4200), die in der Brennkammer (1210, 4100) montiert ist und mit einer Stirnplatte (1213, 4130) der Brennkammer (1210, 4100) verbunden ist, wobei die Brennstoffdüsenanordnung (1220, 2000, 3000, 4200) Folgendes enthält:
eine Innenbrennstoffdüse (2100, 3100, 4210) und
mehrere Außenbrennstoffdüsen (2200, 3200, 4220a, 4220b), die radial um die Innenbrennstoffdüse (2100, 3100, 4210) angeordnet sind, wobei jede Außenbrennstoffdüse (2200, 3200, 4220a, 4220b) einen zentralen Körper (2210, 3210, 4221a, 4221b) zum Kraftstoffeinspritzen und eine Ummantelung (2220, 3220, 4222a, 4222b), die vom zentralen Körper (2210, 3210, 4221a, 4221b) beabstandet ist und diesen umgibt, enthält, wobei die Ummantelungen (2220, 3220, 4222a, 4222b) der Außenbrennstoffdüsen (2200, 3200, 4220a, 4220b) durch eine Reihe nach außen gewandter Kanten der Ummantelungen (2220, 3220, 4222a, 4222b) einen Außenumfang (OP) der Brennstoffdüsenanordnung (1220, 2000, 3000, 4200) bilden, wobei
jede der Außenbrennstoffdüsen (2200, 3200, 4220a, 4220b) einen Einlass (2224) für Luft, der bei einem Ende der Ummantelung (2220, 3220, 4222a, 4222b) gebildet ist, und einen Kraftstoffdüsenrand (2230), der beim Einlass (2224) der Ummantelung (2220, 3220, 4222a, 4222b) gebildet ist, umfasst, wobei der Kraftstoffdüsenrand (2230) von der Ummantelung (2220, 3220, 4222a, 4222b) mit derselben oder einer erhöhten Dicke wie die der Ummantelung (2220, 3220, 4222a, 4222b) verläuft und einer nach außen verlaufenden Kurve, die einen gleichförmigen Krümmungsradius (Ra, Rb) besitzt, folgt; und
die Kraftstoffdüsenränder (2230) gemeinsam einen Umfangsrand (2231) definieren, der beim Außenumfang (OP) der Brennstoffdüsenanordnung (1220, 2000, 3000, 4200) gebildet und angeordnet ist;
**dadurch gekennzeichnet, dass**
der Kraftstoffdüsenrand (2230, 3230) mindestens einer der mehreren Außenbrennstoffdüsen (2200, 3200, 4220a, 4220b) bei einem Abschnitt des Einlasses (2224) der Ummantelung (2220, 3220, 4222a, 4222b) gebildet ist und einen Winkel (θ) im Bereich von 90 Grad bis 240 Grad um einen Mittelpunkt der Außenbrennstoffdüse (2200, 3200, 4220a, 4220b) bildet und im Umfangsrand (2231) enthalten ist.

2. Verbrennungsvorrichtung (1200, 4000) nach Anspruch 1, wobei jeder Kraftstoffdüsenrand (2230, 3230) der Außenbrennstoffdüsen (2200, 3200, 4220a, 4220b) bei einem Abschnitt des Einlasses (2224) der Ummantelung (2220, 3220, 4222a, 4222b) gebildet ist und einen Winkel (θ) im Bereich von 90 Grad bis 240 Grad um einen Mittelpunkt der Außenbrennstoffdüse (2200, 3200, 4220a, 4220b) bildet und im Umfangsrand (2231) enthalten ist.

3. Verbrennungsvorrichtung (1200, 4000) nach einem der vorhergehenden Ansprüche, wobei der Umfangsrand (2231) derart nach außen gekrümmt ist, dass er einen gleichförmigen Krümmungsradius (Ra, Rb) besitzt.

4. Verbrennungsvorrichtung (1200, 4000) nach einem der vorhergehenden Ansprüche, wobei der Umfangsrand (2231) mindestens zwei Kraftstoffdüsenränder (2230, 3230) besitzt, die verschiedene Krümmungsradien besitzen.

5. Verbrennungsvorrichtung (1200, 4000) nach einem der vorhergehenden Ansprüche, wobei mindestens zwei der mehreren Außenbrennstoffdüsen (2200, 3200, 4220a, 4220b) verschiedene Einlassradien einer entsprechenden Ummantelung besitzen.

6. Verbrennungsvorrichtung (1200, 4000) nach Anspruch 5, wobei der Umfangsrand (2231) einen Kraftstoffdüsenrand (2230, 3230), der einen Krümmungsradius besitzt, der vom Einlassradius abhängt, enthält.

7. Verbrennungsvorrichtung (1200, 4000) nach Anspruch 5 oder 6, wobei der Krümmungsradius des Kraftstoffdüsenrands (2230, 3230), der an der Ummantelung, die einen kleinen Einlassradius besitzt, gebildet ist, größer als ist der Krümmungsradius des Kraftstoffdüsenrands (2230, 3230), der an der Ummantelung, die einen großen Einlassradius besitzt, gebildet ist.

8. Verbrennungsvorrichtung (1200, 4000) nach einem der vorhergehenden Ansprüche, wobei die Innenbrennstoffdüse (2100, 3100, 4210) Folgendes enthält:
einen zentralen Körper (2110, 4211) zum Kraftstoffeinspritzen;
eine Ummantelung (3120, 4212), die vom zentralen Körper (2110, 4211) der Innenbrennstoffdüse (2100, 3100, 4210) beabstandet ist und diesen umgibt; und
einen Brennstoffdüsenrand (3130), der bei einem Einlass (2124) der Ummantelung (3120, 4212) der Innenbrennstoffdüse (2100, 3100, 4210) gebildet ist.

9. Verbrennungsvorrichtung (1200, 4000) nach Anspruch 8, wobei die Kraftstoffdüsenränder (3230) der Ummantelungen (2220, 3220, 4222a, 4222b) der Außenbrennstoffdüsen (2200, 3200, 4220a, 4220b) einen ersten Krümmungsradius besitzen und der Brennstoffdüsenrand (3130), der bei der Ummantelung (3120, 4212) der Innenbrennstoffdüse (2100, 3100, 4210) gebildet ist, einer nach außen verlaufenden Kurve folgt, die einen zweiten Krümmungsradius besitzt, wobei der zweite Krümmungsradius kleiner als der erste Krümmungsradius ist.

10. Verbrennungsvorrichtung (1200, 4000) nach Anspruch 9, wobei der erste Krümmungsradius mindestens 1,05 Mal größer ist als der zweite Krümmungsradius.

11. Verbrennungsvorrichtung (1200, 4000) nach einem der vorhergehenden Ansprüche, wobei die mehreren Außenbrennstoffdüsen (2200, 3200, 4220a, 4220b) eine erste Außenbrennstoffdüsengruppe (4222a-1), die einen ersten Einlassradius der Ummantelung (4222a) besitzt, und eine zweite Außenbrennstoffdüsengruppe (4222b-1), die einen zweiten Einlassdüsenradius der Ummantelung (4222b) besitzt, enthalten und wobei die Ummantelungen der ersten und der zweiten Außenbrennstoffdüsengruppen (4222a-1, 4222b-1) um die Innenbrennstoffdüse (4210) abwechselnd angeordnet sind.

12. Verbrennungsvorrichtung (1200, 4000) nach Anspruch 11, wobei der erste Einlassradius größer als der zweite Einlassradius ist.

13. Verbrennungsvorrichtung (1200, 4000) nach einem der vorhergehenden Ansprüche, wobei das eine Ende einer entsprechenden Ummantelung in einem eingestellten Abstand von der Stirnplatte (1213, 4130) angeordnet ist und der eingestellte Abstand von Folgendem abhängt:
Relativpositionen der Innenbrennstoffdüse (2100, 3100, 4210) und der Außenbrennstoffdüsen (2200, 3200, 4220a, 4220b) und/oder
einem Einlassradius der entsprechenden Ummantelung.

14. Verbrennungsvorrichtung (1200, 4000) nach Anspruch 13, wobei die Ummantelungen von mindestens zwei Außenbrennstoffdüsen (2200, 3200, 4220a, 4220b) verschiedene Einlassradien besitzen und wobei
der Abstand zwischen der Stirnplatte (1213, 4130) und der Ummantelung umso kürzer ist, je kleiner der Einlassradius der Ummantelung ist.

15. Gasturbine (1000), die Folgendes umfasst: einen Kompressor (1100) zum Verdichten von Luft, eine Verbrennungsvorrichtung (1200, 4000) zum Mischen und Verbrennen der Druckluft und von Kraftstoff und eine Turbine (1300) zum Erzeugen von Leistung durch eine Drehung durch ein Verbrennungsgas, das von der Verbrennungsvorrichtung (1200, 4000) empfangen wird,
**gekennzeichnet durch** die Verbrennungsvorrichtung (1200, 4000) nach einem der vorhergehenden Ansprüche.

## Revendications

1. Dispositif de combustion (1200, 4000) pour une turbine à gaz, comportant :
une chambre de combustion (1210, 4100) ; et
un ensemble d'injecteurs de combustible (1220, 2000, 3000, 4200) monté dans la chambre de combustion (1210, 4100) et relié à une plaque extrémité (1213, 4130) de la chambre de combustion (1210, 4100), l'ensemble d'injecteurs de combustible (1220, 2000, 3000, 4200) incluant :
un injecteur de combustible intérieur (2100, 3100, 4210) ;
une pluralité d'injecteurs de combustible extérieurs (2200, 3200, 4220a, 4220b) disposés radialement autour de l'injecteur de combustible intérieur (2100, 3100, 4210), chaque injecteur de combustible extérieur (2200, 3200, 4220a, 4220b) incluant un corps central (2210, 3210, 4221a, 4221b) pour une injection de combustible et une chemise (2220, 3220, 4222a, 4222b) espacée du corps central (2210, 3210, 4221a, 4221b) et entourant celui-ci, les chemises (2220, 3220, 4222a, 4222b) des 'injecteurs de combustible extérieurs (2200, 3200, 4220a, 4220b) formant une périphérie extérieure (OP) de l'ensemble d'injecteurs de combustible (1220, 2000, 3000, 4200) par une série de bords dirigés vers l'extérieur des chemises (2220, 3220, 4222a, 4222b), et
dans lequel chacun des injecteurs de combustible extérieurs (2200, 3200, 4220a, 4220b) comporte une entrée (2224) pour l'air formée à une extrémité de la chemise (2220, 3220, 4222a, 4222b) et un rebord d'injecteur de combustible (2230) formé à l'entrée (2224) de la chemise (2220, 3220, 4222a, 4222b), dans lequel le rebord d'injecteur de combustible (2230) s'étend à partir de la chemise (2220, 3220, 4222a, 4222b) avec la même épaisseur ou une épaisseur plus grande que celle de la chemise (2220, 3220, 4222a, 4222b) et suit une courbe s'étendant vers l'extérieur ayant un rayon de courbure (Ra, Rb) uniforme ; et
dans lequel les rebords d'injecteurs de combustible (2230) définissent collectivement un rebord périphérique (2231) formé et disposé sur la périphérie extérieure (OP) de l'ensemble d'injecteurs de combustible (1220, 2000, 3000, 4200) ;
**caractérisé en ce que**
le rebord d'injecteur de combustible (2230, 3230) d'au moins un injecteur parmi la pluralité d'injecteurs de combustible extérieurs (2200, 3200, 4220a, 4220b) est formé sur une partie de l'entrée (2224) de la chemise (2220, 3220, 4222a, 4222b) et forme un angle (θ) variant de 90 degrés à 240 degrés autour d'un centre de l'injecteur de combustible extérieur (2200, 3200, 4220a, 4220b) et est inclus dans le rebord périphérique (2231).

2. Dispositif de combustion (1200, 4000) selon la revendication 1, dans lequel chaque rebord d'injecteur de combustible (2230, 3230) des injecteurs de combustible extérieurs (2200, 3200, 4220a, 4220b) est formé sur une partie de l'entrée (2224) de la chemise (2220, 3220, 4222a, 4222b) et forme un angle (θ) variant de 90 degrés à 240 degrés autour d'un centre de l'injecteur de combustible extérieur (2200, 3200, 4220a, 4220b) et est inclus dans le rebord périphérique (2231).

3. Dispositif de combustion (1200, 4000) selon l'une quelconque des revendications précédentes, dans lequel le rebord périphérique (2231) est incurvé vers l'extérieur pour avoir un rayon de courbure (Ra, Rb) uniforme.

4. Dispositif de combustion (1200, 4000) selon l'une quelconque des revendications précédentes, dans lequel le rebord périphérique (2231) a au moins deux rebords d'injecteurs de combustible (2230, 3230) ayant différents rayons de courbure.

5. Dispositif de combustion (1200, 4000) selon l'une quelconque des revendications précédentes, dans lequel au moins deux injecteurs parmi la pluralité d'injecteurs de combustible extérieurs (2200, 3200, 4220a, 4220b) ont différents rayons d'entrée d'une chemise correspondante.

6. Dispositif de combustion (1200, 4000) selon la revendication 5, dans lequel le rebord périphérique (2231) inclut un rebord d'injecteur de combustible (2230, 3230) ayant un rayon de courbure qui dépend du rayon d'entrée.

7. Dispositif de combustion (1200, 4000) selon la revendication 5 ou 6, dans lequel le rayon de courbure du rebord d'injecteur de combustible (2230, 3230) formé sur la chemise ayant un petit rayon d'entrée est plus grand que le rayon de courbure du rebord d'injecteur de combustible (2230, 3230) formé sur la chemise ayant un grand rayon d'entrée.

8. Dispositif de combustion (1200, 4000) selon l'une quelconque des revendications précédentes, dans lequel l'injecteur de combustible intérieur (2100, 3100, 4210) inclut :
un corps central (2110, 4211) pour l'injection de combustible ;
une chemise (3120, 4212) espacée du corps central (2110, 4211) de l'injecteur de combustible intérieur (2100, 3100, 4210) et entourant celui-ci ; et
un rebord d'injecteur de combustible (3130) formé sur une entrée (2124) de la chemise (3120, 4212) de l'injecteur de combustible intérieur (2100, 3100, 4210).

9. Dispositif de combustion (1200, 4000) selon la revendication 8, dans lequel les rebords d'injecteurs de combustible (3230) des chemises (2220, 3220, 4222a, 4222b) des injecteurs de combustible extérieurs (2200, 3200, 4220a, 4220b) ont un premier rayon de carbure, et le rebord d'injecteur de combustible (3130) formé sur la chemise (3120, 4212) de l'injecteur de combustible intérieur (2100, 3100, 4210) suit une courbe s'étendant vers l'extérieur ayant un second rayon de courbure, et dans lequel le second rayon de courbure est plus petit que le premier rayon de courbure.

10. Dispositif de combustion (1200, 4000) selon la revendication 9, dans lequel le premier rayon de courbure est au moins 1,05 fois plus grand que le second rayon de courbure.

11. Dispositif de combustion (1200, 4000) selon l'une quelconque des revendications précédentes, dans lequel la pluralité d'injecteurs de combustible extérieurs (2200, 3200, 4220a, 4220b) inclut un premier groupe d'injecteurs de combustible extérieurs (4222a-1) ayant un premier rayon d'entrée de la chemise (4222a) et un second groupe d'injecteurs de combustible extérieurs (4222b-1) ayant un second rayon d'entrée de la chemise (4222b), et dans lequel les chemises des premier et second groupes d'injecteurs de combustible extérieurs (4222a-1, 4222b-1) sont agencés de manière alternée autour de l'injecteur de combustible intérieur (4210).

12. Dispositif de combustion (1200, 4000) selon la revendication 11, dans lequel le premier rayon d'entrée est plus grand que le second rayon d'entrée.

13. Dispositif de combustion (1200, 4000) selon l'une quelconque des revendications précédentes, dans lequel l'extrémité d'une chemise correspondante est disposée à une distance réglée par rapport à la plaque d'extrémité (1213, 4130), la distance réglée dépendant d'au moins un élément parmi
des positions relatives de l'injecteur de combustible intérieur (2100, 3100, 4210) et des injecteurs de combustible extérieurs (2200, 3200, 4220a, 4220b) et
un rayon d'entrée de la chemise correspondante.

14. Dispositif de combustion (1200, 4000) selon la revendication 13, dans lequel les chemises d'au moins deux injecteurs de combustible extérieurs (2200, 3200, 4220a, 4220b) ont différents rayons d'entrée, et
dans lequel plus le rayon d'entrée de la chemise est petit, plus la distance entre la plaque d'extrémité (1213, 4130) et la chemise est courte.

15. Turbine à gaz (1000) comportant : un compresseur (1100) pour comprimer de l'air, un dispositif de combustion (1200, 4000) pour mélanger et brûler l'air comprimé et du combustible, et une turbine (1300) pour générer de l'énergie par rotation par un gaz de combustion reçu du dispositif de combustion (1200, 4000),
**caractérisée en ce que** le dispositif de combustion (1200, 4000) est selon l'une quelconque des revendications précédentes.
